(19) Europäisches Patentamt
European Patent Office
Office européen des brevets

(11) EP 2 298 842 B1

(12) EUROPEAN PATENT SPECIFICATION

(45) Date of publication and mention of the grant of the patent:
**21.02.2018 Bulletin 2018/08**

(21) Application number: **09773351.3**

(22) Date of filing: **24.06.2009**

(51) Int Cl.:
***C09D 175/04*** (2006.01)
***B05D 1/36*** (2006.01)
***B05D 7/24*** (2006.01)
***C09D 175/06*** (2006.01)
***C09D 175/08*** (2006.01)

(86) International application number:
**PCT/JP2009/061447**

(87) International publication number:
**WO 2010/001773 (07.01.2010 Gazette 2010/01)**

# (54) COATING COMPOSITION AND COATING FILM FORMATION METHOD USING SAME

BESCHICHTUNGSZUSAMMENSETZUNG UND VERFAHREN ZUR FORMIERUNG EINES BESCHICHTUNGSFILMS DAMIT

COMPOSITION DE REVÊTEMENT ET PROCÉDÉ DE FORMATION D'UN FILM DE REVÊTEMENT L'EMPLOYANT

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **01.07.2008 JP 2008172541**

(43) Date of publication of application:
**23.03.2011 Bulletin 2011/12**

(73) Proprietor: **Showa Denko K.K.**
**Tokyo 105-8518 (JP)**

(72) Inventors:
- **ISHII, Nobuaki**
  **Tokyo 105-8518 (JP)**
- **URAKAWA, Katsuro**
  **Tokyo 105-8518 (JP)**
- **MITARAI, Nobuyuki**
  **Tokyo 105-8518 (JP)**
- **MUROFUSHI, Katsumi**
  **Tokyo 105-8518 (JP)**

(74) Representative: **Strehl Schübel-Hopf & Partner**
**Maximilianstrasse 54**
**80538 München (DE)**

(56) References cited:
**EP-A2- 1 891 175**
**WO-A1-03/006520**
**JP-A- 1 016 821**
**JP-A- 2 004 814**
**JP-A- 10 195 373**
**JP-A- 11 236 423**
**JP-A- 2006 348 172**
**JP-T- 2004 534 895**
**US-A1- 2004 214 911**

EP 2 298 842 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to paint compositions capable of imparting excellent scratch resistance and impact resistance to paint films. The invention also relates to processes for forming multilayer paint films using the compositions, and to multilayer paint films. The invention further relates to paint compositions for forming clear paint films.

BACKGROUND ART

In general, clear paint films are provided for the finishing of automobiles and the like. The clear paint film refers to a transparent paint film that is an outermost layer formed by the application of a transparent paint after the application of a base, generally colored, paint. The purposes of the clear paint films include: (1) Enhancements in gloss and vividness. The transparent paint film covers fine unevenness formed by color pigments on the base layer, and thereby dullness due to scattered reflection is eliminated and more vivid colors are achieved. (2) Enhancements in durability. The clear paint films give high durability performances such as UV resistance, acid rain resistance and chemical resistance. (3) Enhancements in maintenance properties. The clear paint films provide abrasion resistance and contamination resistance to reduce scratches due to car washing or the like.

The scratch resistance and impact resistance of the clear paint films are part of the important quality characteristics required for final products. In detail, the scratch resistance is associated with problems that the paint films are flawed by frictional force exerted on the products during car washing or the like, and the impact resistance is related with problems that the paint films are removed or cracked when strong external force is applied thereto, for example by small stones that hit running vehicles. Accordingly, there has been a demand for higher scratch resistance and impact resistance.

The scratch resistance of the clear paint films is known to improve by increasing the crosslinking density of crosslinkable resins that form the paint films. Such paints capable of forming paint films having high scratch resistance include a clear paint composition that is produced by blending in a specific ratio a fluorine-containing copolymer having a specific OH value, an acrylic copolymer having a specific OH value and an isocyanate prepolymer as a curing agent (Patent Literature 1), and a photocurable resin composition that contains a urethane compound having a specific structure, an acrylic photopolymerizable monomer having a specific structure and a photopolymerization initiator (Patent Literature 2).

Improved scratch resistance is also approached by paint compositions other than acryl-isocyanate paint films. For example, polycaprolactone is introduced to a polysiloxane paint film to increase elastic properties and thereby to improve scratch resistance (Patent Literatures 3 and 4).

Such conventional acryl-isocyanate paint films and polysiloxane paint films show a certain level of scratch resistance. In applications such as automobile exterior parts, however, strong external force exerted by debris or small stones that hit running vehicles can result in problems that include not only damages on the surface of the paint films but also cracks into a depth of the paint films and the scraping off of the paint films.

In more detail, the paint composition described in Patent Literature 1 achieves increased scratch resistance by increasing the hardness of the paint films through the introduction of an acrylic copolymer, and the increased scratch resistance of the photocurable resin composition of Patent Literature 2 relies on increasing the hardness of the paint films by increasing the crosslinking density through the introduction of a structure accelerating photopolymerization by UV application. However, with an excessively high crosslinking density, an increasing strain by cure shrinkage results in lowered adhesion or cracks. Increasing the hardness according to these patent literatures has limitation, and it has been difficult that the surface of the paint films achieves hardness enough to withstand friction at a high external force as described above.

The paint compositions according to Patent Literatures 3 and 4 achieve increased scratch resistance by way of elasticity provided by polycaprolactone which relaxes impact when debris or the like collides with the paint films. However, the paint films obtained from these paint compositions are poor in hardness and are often scraped off when the surface of the paint films is frictioned at a high external force as described Patent Literature 5 discloses a clear coating composition useful for refinishing clear coat/color coat finishes of a vehicle such as an automobile or a truck. In example 5, a polyisocyanate prepolymer is prepared from styrene, 2-ethyl hexyl methacrylate, butyl acrylate, isocyanatoethyl methacrylate (ICEMA) and isobornyl methacrylate. Afterwards, a paint is obtained by reacting the polyisocyanate prepolymer with a hydroxy functional polymer (see p.20, section "Paint examples") .

Citation List

Patent Literature 1: JP-A-H05-32935
Patent Literature 2: JP-A-2000-297112
Patent Literature 3: JP-A-H11-228905
Patent Literature 4: JP-A-2001-11376
Patent Literature 5: WO 03/006520 A1

SUMMARY OF INVENTION

Technical Problem

It is therefore an object of the present invention to provide paint compositions showing excellent performances in both scratch resistance and impact resistance, and to provide processes for forming multilayer paint films using the paint composition. It is another object of the invention to provide paint compositions suitably used as clear paints for finish painting automobiles and the like, and to provide highly solidifiable paint compositions. Herein, the term highly solidifiable means that the paint can have a high solid concentration.

Solution to Problem

The present inventors studied diligently based on the following ideas in order to achieve the above objects. A compound having an isocyanate group and a polyol are reacted together to form a urethane bond, namely crosslinking. In such production of paint films, the compound having an isocyanate group is derived from a (meth)acrylate compound. In detail, a (meth)acrylate compound having an isocyanate group is homopolymerized at the (meth)acrylate moiety or is copolymerized with another (meth)acrylate compound to give an isocyanate pendant prepolymer. The crosslinking density may be controlled by adjusting the copolymerization ratio. Namely, the hardness of paint films may be thus controlled. Further, the hardness of paint films provided by the hydrogen bonds between urethane bonds, as well as elastic properties, may be controlled by adjusting the length between the isocyanate group and the (meth)acrylate moiety of the (meth)acrylate compound having an isocyanate group or the length of the polyol that is reacted with the isocyanate group pendant from the prepolymer main chain. As a result of the studies based on the above ideas, the present inventors have found that the objects are achieved by using a paint composition which contains as an essential component a polyisocyanate prepolymer that is a (meth)acrylate copolymer or homopolymer derived from a specific (meth) acrylate compound having an isocyanate group and further contains a polyol as a crosslinking agent, and in which the average functional group equivalent weight is in a specific range. The present invention has been completed based on the finding. In detail, the present invention is as follows.

[1] A paint composition which comprises a polyisocyanate prepolymer (A) comprising a monomer unit of Formula (1) below and a polyol (B), wherein the polyisocyanate prepolymer (A) has a weight average molecular weight determined by gel permeation chromatography (GPC) relative to polystyrene standards of 1000 to 30000 and the paint composition has an average functional group equivalent weight of 160 to 400 g/eq;

[Chem. 1]

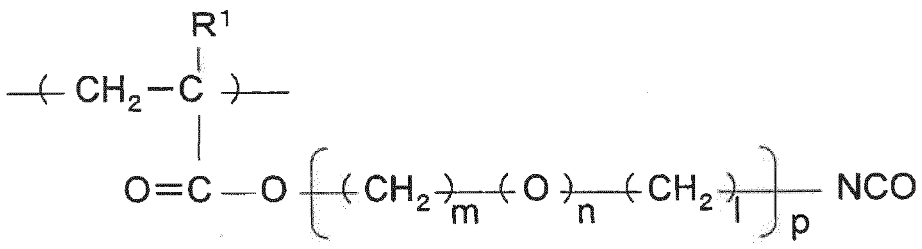

(1)

wherein $R^1$ is a hydrogen atom or a methyl group; n is an integer of 0 or 1; when n = 0, l = 0, p = 1 and m is an integer of 1 to 8; and when n = 1, m = 2, l = 2 and p is an integer of 1 to 4.
[2] The paint composition described in [1], wherein the average functional group equivalent weight is 180 to 360 g/eq.
[3] The paint composition described in [1] or [2], wherein the polyisocyanate prepolymer (A) comprises at least one raw material monomer selected from the group consisting of acryloyloxyethyl isocyanate, methacryloyloxyethyl isocyanate and methacryloyloxyethoxyethyl isocyanate.
[4] The paint composition described in any one of [1] to [3], wherein the polyol (B) comprises at least one selected

from the group consisting of polylactone polyols (b1), polyether polyols (b2), polycarbonate diols (b3) and aliphatic diols (b4).

[5] A process for forming multilayer paint films, comprising forming a clear paint film on a base paint film, the clear paint film comprising the paint composition described in any one of [1] to [4].

[6] A multilayer paint film produced by the process for forming multilayer paint films described in [5].

[7] An automobile exterior part which comprises a multilayer paint film produced by the process for forming multilayer paint films described in [5].

Advantageous Effects of Invention

The paint compositions of the invention allow for the production of paint films showing excellent performances in both scratch resistance and impact resistance. The processes for forming multilayer paint films of the invention involve the paint compositions to afford paint films showing excellent performances in both scratch resistance and impact resistance. The paint compositions and the processes for forming multilayer paint films are suitably applied to the production of clear paint films for the finish painting of automobiles and the like. Furthermore, the paint compositions of the invention are highly solidifiable for use as spray paints or the like, and thereby the amount of solvents and VOC can be reduced.

DESCRIPTION OF EMBODIMENTS

Hereinbelow, the paint compositions, the processes for forming multilayer paint films, and the multilayer paint films according to the invention will be described in detail. However, the scope of the invention is not limited to the following description, and the embodiments described below may be appropriately modified within the scope of the invention.

[Paint compositions]

Paint compositions of the invention contain a polyisocyanate prepolymer (A) as an essential component which includes a monomer unit of Formula (1) below derived from a (meth)acrylate compound having an isocyanate group. The compositions also contain a polyol (B) as a crosslinking agent. Herein, the term prepolymer refers to a compound formed by polymerization which contains a curable functional group and can further undergo a curing reaction.

[Chem. 2]

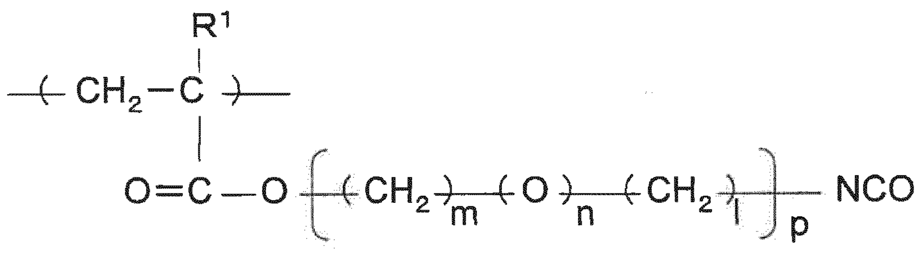

(1)

In Formula (1), $R^1$ is a hydrogen atom or a methyl group; n is an integer of 0 or 1; when n = 0, l = 0, p = 1 and m is an integer of 1 to 8; and when n = 1, m = 2, l = 2 and p is an integer of 1 to 4.

The polyisocyanate prepolymers (A) have a weight average molecular weight of 1000 to 30000,preferably 2000 to 25000, and particularly preferably 2500 to 20000. If the weight average molecular weight is below 1000, elastic properties that are characteristic in the present invention will not be fully exhibited. If the weight average molecular weight is in excess of 30000, the viscosity will be so high that the obtainable paint compositions may have lower handling properties and application properties. The weight average molecular weight is determined by gel permeation chromatography (GPC) relative to polystyrene standards according to conventional methods.

For the production of the polyisocyanate prepolymers (A), compounds that will form the monomer units of Formula (1), namely (meth)acrylate compounds having an isocyanate group (a1), are essential monomers. Where necessary, unsaturated compounds having a cyclic skeleton (a2) and/or other unsaturated carboxylic acid compounds or unsaturated ester compounds (a3) may be copolymerized therewith.

The (meth)acrylate compounds having an isocyanate group (a1) are isocyanate compounds containing an unsaturated group, represented by Formula (2) below. The isocyanate compounds containing an unsaturated group

may be used singly as the compound (a1), or two or more kinds may be used in combination.

[Chem. 3]

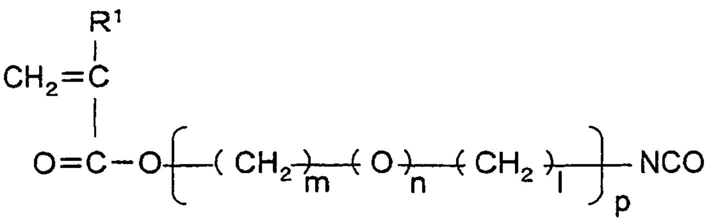

(2)

In Formula (2), $R^1$, m, n, l and p are the same as $R^1$, m, n, 1 and p in Formula (1).

Specific examples of the compounds (a1) include acryloyloxyethyl isocyanate (AOI) represented by Formula (10), methacryloyloxyethyl isocyanate (MOI) represented by Formula (11), and methacryloyloxyethoxyethyl isocyanate (MOI-EG) represented by Formula (12). These compounds may be used singly, or two or more kinds may be used in combination.

[Chem. 4]

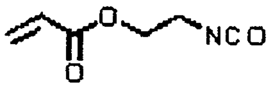

(10)

[Chem. 5]

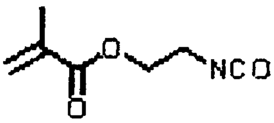

(11)

[Chem. 6]

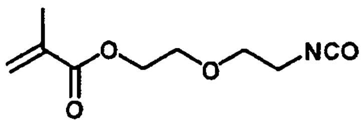

(12)

The copolymerization ratio of the compound (a1), namely the ratio of monomer units derived from the compound (a1) relative to all the monomer units in the polyisocyanate prepolymer (A), is not particularly limited. From the viewpoint of satisfying both scratch resistance and impact resistance, the ratio is preferably not less than 50 mol%, and more preferably not less than 80 mol%. If the ratio of the units from the compounds is less than 50 mol%, sufficient crosslinking density is not obtained and poor strength may result.

The unsaturated compounds having a cyclic skeleton (a2) are (meth)acryl compounds having a cyclic skeleton and no isocyanate groups.

Examples of the compounds (a2) include cycloalkyl (meth)acrylates such as cyclohexyl (meth)acrylate, dicyclopentanyl (meth)acrylate, dicyclopentenyl (meth)acrylate, norbornyl (meth)acrylate, isobornyl (meth)acrylate, tricyclodecanyl (meth)acrylate and morpholinyl (meth)acrylate; and ethylenically unsaturated aromatic compounds such as

styrene, α-methylstyrene, o-methylstyrene, m-methylstyrene and p-methylstyrene. These compounds may be used singly, or two or more kinds may be used in combination.

From the viewpoints of high glass transition temperature and capability of imparting high strength, isobornyl (meth)acrylate, tricyclodecanyl (meth)acrylate and morpholinyl (meth)acrylate are preferred, and tricyclodecanyl (meth)acrylate is most preferred. Formulae (3) to (5) below illustrate monomer units derived from isobornyl (meth) acrylate, tricyclodecanyl (meth)acrylate and morpholinyl (meth)acrylate, respectively.

[Chem. 7]

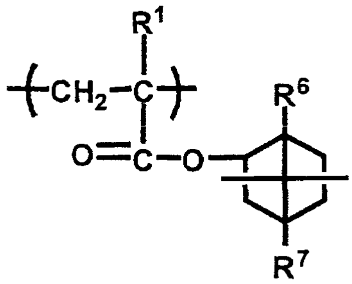

(3)

In Formula (3), $R^1$ is the same as $R^1$ in Formula (1), one of $R^6$ and $R^7$ is always a methyl group and the other is always a hydrogen atom.

[Chem. 8]

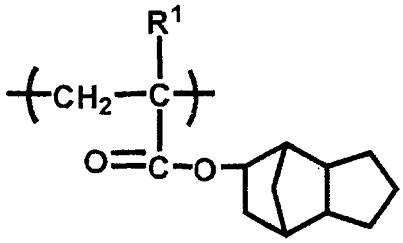

(4)

In Formula (4), $R^1$ is the same as $R^1$ in Formula (1) .

[Chem. 9]

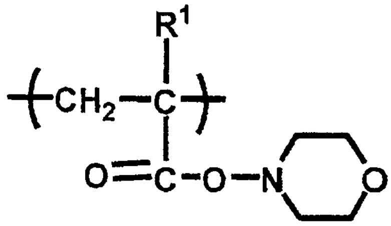

(5)

In Formula (5), $R^1$ is the same as $R^1$ in Formula (1).

The unsaturated carboxylic acid compounds or unsaturated ester compounds (a3) are (meth)acryl compounds having no isocyanate groups or no cyclic skeletons.

Preferred examples of the compounds (a3) include, but are not limited to, carboxyl group-containing compounds such as (meth)acrylic acid, crotonic acid, maleic acid, fumaric acid and itaconic acid; alkyl (meth)acrylates such as methyl (meth)acrylate, ethyl (meth)acrylate, propyl (meth)acrylate, isopropyl (meth)acrylate, butyl (meth)acrylate, isobutyl (meth)acrylate, tert-butyl (meth)acrylate, pentyl (meth)acrylate, amyl (meth)acrylate, isoamyl (meth)acrylate, hexyl (meth)acrylate, octyl (meth)acrylate, isooctyl (meth)acrylate, 2-ethylhexyl (meth)acrylate, nonyl (meth)acrylate, decyl

(meth)acrylate, isodecyl (meth)acrylate, dodecyl (meth)acrylate, lauryl (meth)acrylate, stearyl (meth)acrylate and isostearyl (meth)acrylate; fluoroalkyl (meth)acrylates such as trifluoroethyl (meth)acrylate, tetrafluoropropyl (meth)acrylate, hexafluoroisopropyl (meth)acrylate, octafluoropentyl (meth)acrylate and heptadecafluorodecyl (meth)acrylate; alkoxyalkyl (meth)acrylates such as methoxyethyl (meth)acrylate, ethoxyethyl (meth)acrylate and methoxybutyl (meth)acrylate; polyethylene glycol (meth)acrylates such as ethoxydiethylene glycol (meth)acrylate, methoxypolyethylene glycol (meth) acrylate and phenoxypolyethylene glycol (meth) acrylate; polypropylene glycol (meth)acrylates such as methoxypolypropylene glycol (meth)acrylate, ethoxypolypropylene glycol (meth)acrylate and phenoxypolypropylene glycol (meth)acrylate; (meth)acryloyl isocyanates such as 2-(meth)acryloyloxyethyl isocyanate, 1,3-bis(meth)acryloyloxy-2-methylpropane-2-isocyanate and 3-(meth)acryloyloxyphenyl isocyanate; methyl-benzyl (meth)acrylate, hydroxy(meth)acrylates, tetrahydrofurfuryl (meth)acrylate, glycidyl (meth)acrylate, (meth)acrylates having a caprolactone-modified terminal, and (meth)acrylates having a siloxane skeleton terminal.

The copolymerization ratio of the compounds (a2) and (a3) combined is not particularly limited. From the viewpoint of satisfying both scratch resistance and impact resistance, the ratio is preferably not more than 50 mol%, and more preferably not more than 20 mol%. If the ratio of the compounds (a2) and (a3) is in excess of 50 mol%, sufficient crosslinking density may not be obtained. If the ratio of the compound (a2) exceeds 50 mol%, the obtainable polymer reduces solubility or increases crystallinity, possibly resulting in low handling properties.

The polyisocyanate prepolymers (A) may be synthesized by polymerizing the compound (a1) or copolymerizing the compound (a1) with the compound (a2) and/or the compound (a3).

The synthesis of the polyisocyanate prepolymers (A) may involve a chain transfer agent. The chain transfer agents used herein are not particularly limited, but compounds having a mercapto group are preferable from the viewpoints of reactivity and properties of the resins. Specific examples include monofunctional thiol compounds such as 2-mercaptoethanol, mercaptobenzene and dodecylmercaptane, and polyfunctional thiol compounds represented by Formula (6) below.

[Chem. 10]

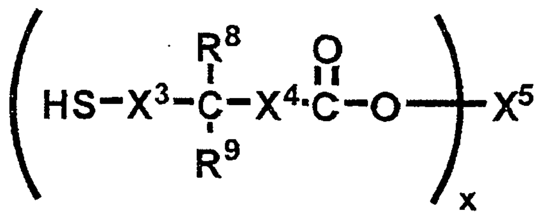

(6)

In Formula (6), X is an alcohol residue of a polyfunctional alcohol compound; $R^8$ and $R^9$ are each independently a hydrogen atom or a C1-4 alkyl group, and preferably a hydrogen atom or a methyl group; $X^3$ and $X^4$ are each independently a single bond or a C1-3 linear or branched alkyl group; and x is an integer of 2 to 10, and preferably 2 to 4.

Specific examples of the polyfunctional thiol compounds include butanediol bis(3-mercaptobutyrate), pentaerythritol tetrakis(3-mercaptobutyrate) and tris-2-(3-mercaptobutyrate)ethyl isocyanurate.

When a trifunctional or multifunctional chain transfer agent is used, the resultant copolymer will have a branched structure. Branched polymers have lower resin viscosity, and handling properties are improved.

The synthesis of the polyisocyanate prepolymers (A) may involve known solvents without limitation. Examples include ester solvents such as ethyl acetate, butyl acetate, propylene glycol monomethyl ether, propylene glycol monomethyl ether acetate and ethylene glycol monobutyl ether acetate, and aromatic hydrocarbon solvents such as toluene and xylene.

In the synthesis of the polyisocyanate prepolymers (A), the reaction temperature is in the range of 60 to 130°C, preferably 70 to 125°C, and more preferably 75 to 120°C. If the reaction temperature is below 60°C, a polymerization initiator may not fully perform its function. The reaction at above 130°C may destroy the isocyanate groups.

The polymerization initiators used in the synthesis of the polyisocyanate prepolymers (A) are not particularly limited, and examples include azo initiators and peroxide initiators. From the viewpoint of stability of the isocyanate groups, azo initiators are preferably used, with examples including azobisisobutyronitrile, 2,2-azobis-(2,4-dimethylvaleronitrile) and dimethyl-2,2-azobis-(2-methylpropionate).

The polyols (B) are compounds having two or more -OH groups. Preferred examples of the polyols (B) include polylactone polyols (b1), polyether polyols (b2), polycarbonate diols (b3) and aliphatic diols (b4). These compounds may be used singly, or two or more kinds may be used in combination.

The polylactone polyols (b1) are not particularly limited. Examples thereof include bifunctional polycaprolactone diols such as compounds represented by Formula (7) below, trifunctional polycaprolactone triols such as compounds represented by Formula (8) below, and tetrafunctional polycaprolactone polyols. These polylactone polyols (b1) may be used singly, or two or more kinds may be used in combination.

[Chem. 11]

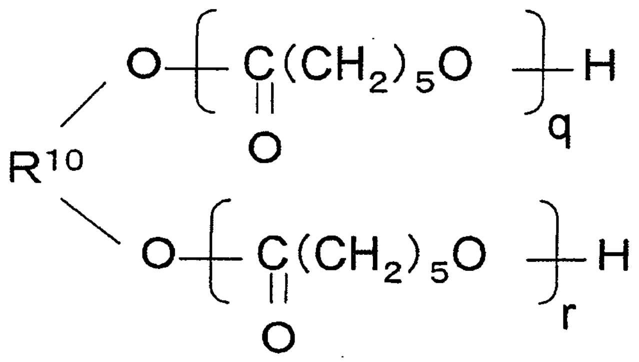

(7)

In Formula (7), $R^{10}$ is any of $-C_2H_4-$, $-C_2H_4OC_2H_4-$ and $-C(CH_2)_2(CH_2)_2-$, and q and r are each an integer of 4 to 35.

[Chem. 12]

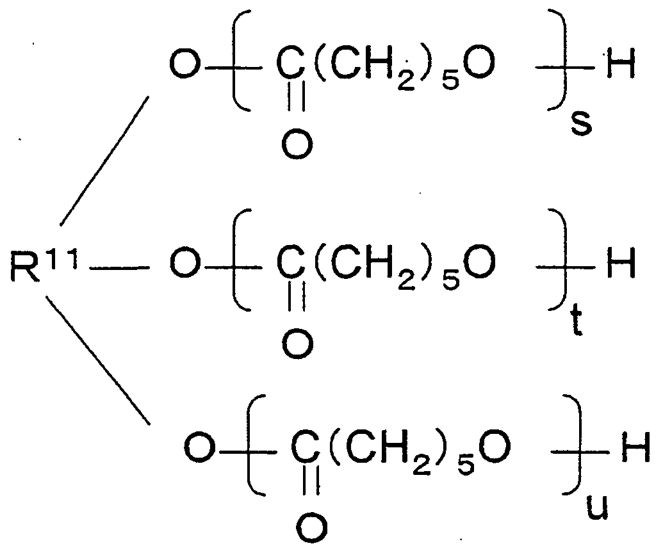

(8)

In Formula (8), $R^{11}$ is any of Formulae (13) to (15) below, and s + t + u is an integer of 3 to 30.

[Chem. 13]

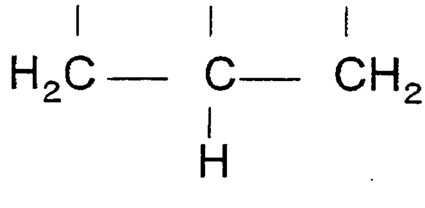

(1 3)

[Chem. 14]

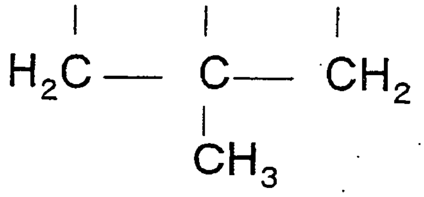

(1 4)

[Chem. 15]

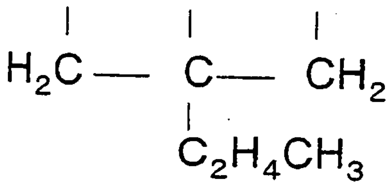

(1 5)

In the polylactone polyols (b1), the number of the -OH groups is preferably 2 to 5, and more preferably 2 to 3. If the polylactone polyols (b1) have more than 5 functional groups, the scratch resistance may be lowered.

The polyether polyols (b2) are not particularly limited. Examples thereof include diethylene glycol, triethylene glycol, polyethylene glycol, dipropylene glycol, tripropylene glycol, polypropylene glycol, polybutylene glycol and polytetramethylene glycol. These polyether polyols (b2) may be used singly, or two or more kinds may be used in combination.

The polycarbonate diols (b3) are not particularly limited. Examples thereof include commonly used compounds having 1,6-hexanediol as a basic skeleton, and polycarbonate diols produced by known processes. For example, such polycarbonate diols may be obtained by reacting a carbonate component such as alkylene carbonate, diaryl carbonate or dialkyl carbonate, or phosgene with an aliphatic diol component described below. Suitable aliphatic diol components include linear glycols such as 1,3-propanediol, 1,4-butanediol and 1,6-hexanediol, and branched glycols represented by Formula (9) below.

[Chem. 16]

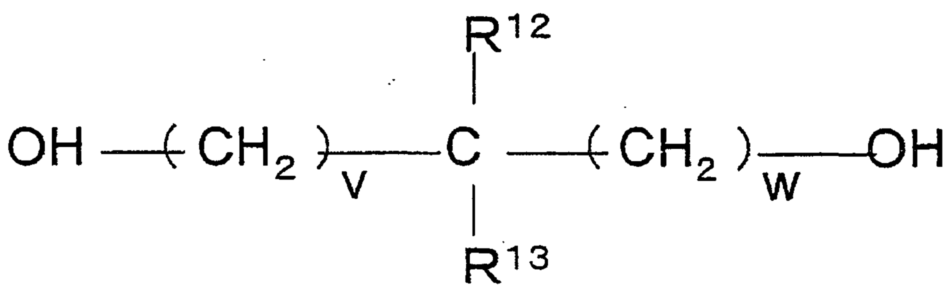

(9)

In Formula (9), $R^{12}$ is $CH_3$- or $CH_3(CH_2)_x$- (wherein x is an integer of 1 to 4), $R^{13}$ is a hydrogen atom, $CH_3$- or $CH_3(CH_2)_y$-(wherein y is an integer of 1 to 4), v and w are the same or differing integers of 1 to 8, and $2 \leq v + w \leq 8$.

Specific examples of the aliphatic diol components include branched glycols such as 1,2-propanediol, neopentyl glycol, 3-methyl-1,5-pentanediol and ethylbutylpropanediol, and ether diols such as diethylene glycol and triethylene glycol.

The aliphatic diols (b4) are not particularly limited. Examples thereof include ethylene glycol, 1,3-propanediol, neopentyl glycol, 1,4-butanediol, 2-isopropyl-1,4-butanediol, 1,5-pentanediol, 3-methyl-1,5-pentanediol, 2,4-dimethyl-1,5-pentanediol, 2,4-diethyl-1,5-pentanediol, 1,6-hexanediol, 2-ethyl-1,6-hexanediol, 1,7-heptanediol, 1,8-octanediol, 2-methyl-1,8-octanediol, 1,9-nonanediol, 1,10-decanediol, 1,3-cyclohexanediol, 1,4-cyclohexanediol, 1,4-cyclohexanedimethanol and 2-bis(4-hydroxycyclohexyl)-propane. These aliphatic diols (b4) may be used singly, or two or more kinds may be used in combination.

In the paint compositions of the invention, the polyisocyanate prepolymer (A) (the main agent) and the polyol (B) component (the curing agent) are preferably mixed together such that the NCO/OH ratio (equivalent ratio) is 0.9 to 1.1, more preferably 0.95 to 1.05, and still more preferably 1.0. The NCO/OH ratio (equivalent ratio) indicates (number of moles of NCO/number of moles of OH). If the NCO/OH ratio (equivalent ratio) is less than 0.9, sufficient crosslinking density may not be obtained and weather resistance may be lowered. If the NCO/OH ratio (equivalent ratio) exceeds 1.1, solvent resistance, water resistance and weather resistance may be lowered, or drying properties may be unsatisfactory.

The paint compositions have an average functional group equivalent weight in the range of 160 to 400 g/eq, preferably 180 to 360 g/eq, and more preferably 200 to 250 g/eq. When the average functional group equivalent weight is in the above range, an excellent balance may be obtained between the maximum pencil hardness at which the film recovers from a dent and the scratch resistance.

Here, the average functional group equivalent weight indicates a value obtained by Formula (16).

[Math. 1]

[Average functional group equivalent weight (P)] (g/eq) = (NCO equivalent weight of polyisocyanate prepolymer (A) x blending molar fraction) + (OH equivalent weight of polyol (B) x blending molar fraction) (16)

In Formula (16), the term NCO equivalent weight indicates the molecular weight of the polyisocyanate prepolymer (A) per one NCO group and is represented by:

[Math. 2]

[NCO equivalent weight] (g/eq) = [solid weight of polyisocyanate prepolymer (A) in paint]/[number of moles of NCO groups]

The term OH equivalent weight indicates the molecular weight of the polyol (B) per one OH group.

When the polyisocyanate prepolymer (A) is composed of a plurality of components, (NCO equivalent weight of polyisocyanate prepolymer (A) x blending molar fraction) is the total of (NCO equivalent weight x blending molar fraction) of all the components. Similarly, when the polyol (B) is composed of a plurality of components, (OH equivalent weight of polyol (B) x blending molar fraction) is the total of (OH equivalent weight x blending molar fraction) of all the components.

The paint compositions of the invention preferably have a molecular weight between crosslinking points of 450 to 650 g/eq, and more preferably 500 to 600 g/eq after the compositions are cured.

Here, the words molecular weight between crosslinking points indicate the molecular weight per one crosslinking point of a crosslinking reaction product that is obtained by reacting the polyisocyanate prepolymer (A) and the polyol (B) in a ratio such that the amounts of the NCO groups and the OH groups are substantially equivalent wherein the crosslinking reaction is assumed to take place among all the NCO groups and the OH groups. In other words, it indicates a value obtained by dividing the molecular weight after the crosslinking with the number of the NCO groups of the polyisocyanate prepolymer (A) (or the number of the OH groups of the polyol (B)). Here, for convenience, the molecular weight between crosslinking points is defined to be obtained according to Formula (17) below from the molecular weight of the polyisocyanate prepolymer (A) per one NCO group (NCO equivalent weight) and the molecular weight of the polyol (B) per one OH group (OH equivalent weight).

[Math. 3]

$$[\text{Molecular weight between crosslinking points}]\ (g/eq) = (\text{NCO equivalent weight} \times \text{number of NCO groups} + \text{OH equivalent weight} \times \text{number of OH groups})/(\text{number of NCO groups}) \quad (17)$$

When the polyisocyanate prepolymer (A) is composed of a plurality of components, (NCO equivalent weight x number of NCO groups) is the total of (NCO equivalent weight x number of NCO groups) of all the components. Similarly, when the polyol (B) is composed of a plurality of components, (OH equivalent weight x number of OH groups) is the total of (OH equivalent weight x number of OH groups) of all the components. The NCO equivalent weight and the OH equivalent weight are as described in Formula (16).

The number of moles of OH groups and that of NCO groups may be calculated based on the amounts of the functional groups in the polyol (B) and the polyisocyanate prepolymer (A) and the blending ratio of these compounds.

The paint compositions according to the invention may contain additives as required while still achieving the advantageous effects of the invention. Such additives include curing accelerators (catalysts), solvents, UV absorbers, light stabilizers, antioxidants, yellowing inhibitors, bluing agents, dispersants, flame retardants, dyes, fillers, organic or inorganic pigments, releasing agents, fluidity modifiers, leveling agents, anti-foaming agents, thickening agents, anti-settling agents, antistatic agents and anti-fogging agents.

Catalysts generally used in the art may be used, with examples including monoamines such as triethylamine and N,N-dimethylcyclohexylamine, diamines such as tetramethylethylenediamine, triamines, cyclic amines, alcohol amines such as dimethylethanolamine, ether amines, metal catalysts such as potassium acetate, potassium 2-ethylhexanoate, calcium acetate, zinc octylate, di-n-butyltin dilaurate, tin octylate, tetra-n-butoxytitanium, bismuth neodecanoate, bismuth oxycarbonate, bismuth 2-ethylhexanoate, zinc octylate and zinc neodecanoate, phosphine and phosphorine.

Examples of the solvents include dimethylformamide, diethylformamide, dimethylacetamide, dimethylsulfoxide, tetrahydrofuran, acetone, methyl ethyl ketone, methyl isobutyl ketone, dioxane, cyclohexanone, benzene, toluene, xylene, ethyl cellosolve, ethyl acetate, butyl acetate, ethanol, isopropanol and n-butanol.

The fillers increase the mechanical strength of the obtainable cured films. Examples thereof include calcium carbonate, talc, mica, clay, silica (such as colloidal silica and AEROSIL (registered trademark)), barium sulfate, aluminum hydroxide and zinc stearate.

The pigments for coloring include calcium carbonate, talc, mica, clay, silica (such as colloidal silica and AEROSIL (registered trademark)), barium sulfate, aluminum hydroxide, zinc stearate, zinc oxide, red oxide, azo pigment and titanium oxide.

Examples of the releasing agents, fluidity modifiers and leveling agents include silicones, silica fine particles, waxes, stearates and polysiloxanes. In detail, suitable examples include BYK 306 (trade name) (leveling agent, manufactured by BYK Japan K.K.).

Examples of the UV absorbers and antioxidants include TINUVIN (trade name) (manufactured by Ciba Specialty Chemicals) and IRGANOX (trade name) (manufactured by Ciba Specialty Chemicals). In detail, suitable examples include TINUVIN 900 (UV absorber, manufactured by Ciba Specialty Chemicals) and TINUVIN 292 (photooxidation inhibitor, manufactured by Ciba Specialty Chemicals).

The paint compositions of the present invention may be used as paints in various applications such as paints for plastics, automobile interior and exterior parts, and floors.

For example, the paint compositions may be suitably applied to automobile exterior parts as clear paints to provide higher scratch resistance and impact resistance.

[Processes for forming multilayer paint films]

Processes for forming multilayer paint films according to the invention include forming a clear paint film on a base paint film formed of a base paint, by applying a clear paint on the base paint film wherein the clear paint contains the paint composition of the invention described hereinabove. In an embodiment, a substrate, for example a metal substrate, is subjected to surface treatment, film formation by electrodeposition, and intermediate paint coating as required; a base paint is overcoated thereon to form a base paint film; and a clear paint containing the paint composition of the invention is applied thereon and treated (cured) to form a paint film. The processes of the invention, however, are not limited to such embodiments.

In another embodiment, a multilayer paint film may be formed on a plastic substrate by the processes for forming multilayer paint films of the invention. In such embodiments, the plastic substrate is subjected to heat treatment (annealing) to remove strains caused during the substrate production, or a primer coat is formed thereon as required; a base paint is then overcoated thereon to form a base paint film; and a clear paint containing the paint composition of the invention is applied thereon and treated (cured) to form a paint film. The processes of the invention, however, are not limited to such embodiments.

The base paints for use in the process of forming multilayer paint films are not particularly limited. Examples thereof include solvent-based paints and aqueous paints such as lacquer paints, acryl-melamine stoving paints and two-component curable urethane paints.

In the processes for forming multilayer paint films, conventional film production methods may be adopted without limitation except that the paint compositions of the invention are used as clear paints.

In the processes for forming multilayer paint films, the base paints or the clear paints may be applied by known methods without limitation such as spray painting, soak painting, shower coat painting, roll coater painting and rotating bell painting. The spray painting or rotating bell painting may be electrostatic painting. The film thickness in the painting may be determined appropriately. For example, the base paint may be applied such that the dry film thickness will be 10 to 20 μm, and the clear paint may be applied such that the dry film thickness will be 20 to 40 μm.

In the processes for forming multilayer paint films, the base paint film and the clear paint film may be formed by applying the respective paints, and drying and treating the wet films by conventional methods to form dry films. The drying or treating methods are not particularly limited, and examples thereof include normal temperature drying, forced drying, normal temperature curing, baking curing and photocuring by UV application. The drying or treating may be performed with respect to each paint film after application of each paint, or may be carried out simultaneously for the paints that are applied by wet-on-wet technique.

[Multilayer paint films]

Multilayer paint films according to the invention are produced by coating a base paint film of a base paint, with a clear paint to form a clear paint film wherein the clear paint contains the paint composition of the invention. The multilayer paint films of the invention have higher scratch resistance and impact resistance than achieved heretofore. In detail, the multilayer paint films have high scratch resistance enough to withstand friction at a high external force exerted thereon by, for example, car washing, and have high impact resistance such that the paint films will not be removed or cracked to the base paint film even when strong impact is applied thereto by, for example, debris that hits running vehicles. The multilayer paint films of the invention may be easily obtained by, for example, the aforementioned processes for forming multilayer paint films of the invention.

EXAMPLES

The present invention will be described in greater detail based on examples. Unless otherwise specified, "parts by mass" and "% by mass" will be simply referred to as "parts" and "%", respectively.

[Resin Production Examples]

-Production of polyisocyanate prepolymer A1-

A reaction vessel equipped with a stirrer, a thermometer, a reflux tube, dropping funnels, a nitrogen inlet tube and a thermostat heater was charged with 500 g of a mixed solvent ($S_0$) containing butyl acetate and xylene in 1:3 mass ratio. The temperature of the inner solvent was increased to 100°C with stirring. One of the dropping funnels was charged with a monomer mixture solution consisting of 352.5 g (= 2.5 mol) of 2-acryloyloxyethyl isocyanate (Karenz AOI (trade name) manufactured by SHOWA DENKO K.K.), 245 g of isoboronyl methacrylate (IBX (trade name) manufactured by Wako Pure Chemical Industries, Ltd.) and 128.5 g of n-butylmethacrylate (nBMA (trade name) manufactured by Wako Pure Chemical Industries, Ltd.). Another dropping funnel was charged with a polymerization initiator solution consisting of 60 g of azo polymerization initiator dimethyl-2,2-azobis-(2-methylpropionate) (V-601 (trade name) manufactured by Wako Pure Chemical Industries, Ltd.) and 120 g of the above mixed solvent ($S_0$). They were dropped separately to the reaction vessel with stirring over a period of 3 hours to perform polymerization. During the reaction, the inner solution was continuously stirred and the liquid temperature was maintained at 100°C. Subsequently, an additional amount of the polymerization initiator solution consisting of 5 g of the azo polymerization initiator (V-601 manufactured by Wako Pure Chemical Industries, Ltd.) and 90 g of the mixed solvent ($S_0$) was dropped to the reaction vessel with stirring over a period of 1 hour while keeping the liquid temperature at 100°C. Subsequently, the liquid temperature was increased to 120°C with stirring and was maintained at the temperature for 1 hour. As a result, a solution (S1) containing a

polyisocyanate prepolymer (A1) was obtained. The polyisocyanate prepolymer (A1) was obtainable as a residue by heat treating the solution at 200°C for 3 hours, namely as a resin solid (NV). The solid proportion was 54%, corresponding to 810 g.

The polyisocyanate prepolymer A1 had a weight average molecular weight of 8850. Based on the fact that 810 g of the resin solid contained 2.5 mol of NCO groups, the NCO equivalent weight was 810/2.5 = 324 g/eq. The weight average molecular weight was determined by gel permeation chromatography (GPC) relative to polystyrene standards according to a conventional method.

-Production of polyisocyanate prepolymer A2-

A polyisocyanate prepolymer A2 was obtained in the same manner as in the production of polyisocyanate prepolymer A1, except that 352.5 g (= 2.5 mol) of 2-acryloyloxyethyl isocyanate used in the production of polyisocyanate prepolymer A1 was replaced by 352.5 g (= 2.5 mol) of 2-(2-methacryloyloxy)ethoxyethyl isocyanate. The polyisocyanate prepolymer (A2) was obtainable as a residue by heat treating the solution at 200°C for 3 hours, namely as a resin solid (NV). The solid proportion was 54%, corresponding to 835 g.

The polyisocyanate prepolymer A2 had a weight average molecular weight of 9000. Based on the fact that 835 g of the resin solid contained 2.5 mol of NCO groups, the NCO equivalent weight was 835/2.5 = 334 g/eq.

-Production of polyisocyanate prepolymer A3-

A polyisocyanate prepolymer A3 was obtained in the same manner as in the production of polyisocyanate prepolymer A1, except that 625 g (= 2.5 mol) of 8-methacryloyloxyoctyl isocyanate was used singly and isoboronyl methacrylate and n-butyl methacrylate were not used, and that the amount of the polymerization initiator V-601 was changed to 30 g. The polyisocyanate prepolymer (A3) was obtainable as a residue by heat treating the solution at 200°C for 3 hours, namely as a resin solid (NV). The solid proportion was 49%, corresponding to 671 g.

The polyisocyanate prepolymer A2 had a weight average molecular weight of 8000. Based on the fact that 671 g of the resin solid contained 2.5 mol of NCO groups, the NCO equivalent weight was 671/2.5 = 268 g/eq.

[Examples of Production of Paint Compositions]

-Paint composition for Example 1-

A reaction vessel equipped with a stirrer was sequentially charged under stirring with 722 g of the solution of the polyisocyanate prepolymer A1 (the solution S1) as a main agent and curing agents: 201 g of polycaprolactone diol (PLACCEL L205AL (trade name) (b1-1; solid content 100%, molecular weight 500, functionality 2, OH equivalent weight 250 g/eq, manufactured by DAICEL CHEMICAL INDUSTRIES, LTD.), and 33 g of tripropylene glycol (b2-1; solid content 100%, functionality 2, OH equivalent weight 96 g/eq, manufactured by Wako Pure Chemical Industries, Ltd.). After they were sufficiently mixed together, the reaction vessel was further charged with 4 g of TINUVIN 900 (trade name) (UV absorber, manufactured by Ciba Specialty Chemicals), 2 g of TINUVIN 292 (trade name) (photooxidation inhibitor, manufactured by Ciba Specialty Chemicals), 2 g of BYK 306 (trade name) (surface conditioner, manufactured by BYK Japan K.K.) and 305 g of the mixed solvent ($S_0$) containing xylene/butyl acetate = 3/1. The components were stirred sufficiently to give a paint composition for use in Example 1.

The paint composition had a resin solid (NV) content of 50%, a viscosity of 50 mPa·s, an average functional group equivalent weight of 219, and a molecular weight between crosslinking points of 517.

The average functional group equivalent weight was obtained as follows:

$$\text{Average functional group equivalent weight} = (323 \times 722 \times 0.54/8850 + 250 \times 201/500 + 96 \times 33/192)/(722 \times 0.54/8850 + 201/500 + 33/192) = 219$$

The molecular weight between crosslinking points was determined as follows:

NCO equivalent weight of polyisocyanate prepolymer A1 in solution S1: 323 g/eq
Number of moles of NCO: 722 x 0.54/323 (p)

OH equivalent weight of polycaprolactone diol: 250 g/eq
Number of moles of OH groups derived from polycaprolactone diol: 201/250 (q)
OH equivalent weight of tripropylene glycol: 96 g/eq
Number of moles of OH groups derived from tripropylene glycol: 33/96 (r)

$$\text{Molecular weight between crosslinking points} = (323p + 250q + 96r)/p = 517$$

The viscosity was measured at 25°C according to a conventional method using B-type viscometer DV-II+Pro (manufactured by BROOKFIELD).

-Paint compositions for Examples 2 to 8 and Comparative Examples 1 to 4-

Paint compositions for Examples 2 to 8 and paint compositions for Comparative Examples 1 to 4 were produced in the same manner as described above, according to the resin blending as shown in Table 1.

The following are properties, OH equivalent weights, manufacturers and trade names of polycaprolactone triol (b1-2), polycaprolactone diols (b1-3) and (b1-4), polycarbonate diol (b3-1) and 1,6-hexanediol (b4-1) used as curing agents in the paint compositions for Examples and Comparative Examples.

Polycaprolactone triol (b1-2): trade name PLACCEL 308, solid content 100%, molecular weight 850, functionality 3, OH equivalent weight 283 g/eq, manufactured by DAICEL CHEMICAL INDUSTRIES, LTD.; Polycaprolactone diol (b1-3): trade name PLACCEL L212AL, solid content 100%, molecular weight 1250, functionality 2, OH equivalent weight 625 g/eq, manufactured by DAICEL CHEMICAL INDUSTRIES, LTD.; Polycaprolactone diol (b1-4): trade name PLACCEL L220AL, solid content 100%, molecular weight 2000, functionality 2, OH equivalent weight 1000 g/eq, manufactured by DAICEL CHEMICAL INDUSTRIES, LTD.

Polycarbonate diol (b3-1): trade name PLACCEL CD205PL, solid content 100%, molecular weight 500, functionality 2, OH equivalent weight 250 g/eq, manufactured by DAICEL CHEMICAL INDUSTRIES, LTD.

1,6-Hexanediol (b4-1): solid content 100%, molecular weight 118, functionality 2, OH equivalent weight 59 g/eq, manufactured by Wako Pure Chemical Industries, Ltd.

Table 1 below shows the resin solid (NV) contents, viscosities, average functional group equivalent weights, and molecular weights between crosslinking points of the paint compositions.

[Table 1]

Table 1

| | | Ex. 1 | Ex. 2 | Ex. 3 | Ex. 4 | Ex. 5 | Ex. 6 | Ex. 7 | Ex. 8 | Comp. Ex. 1 | Comp. Ex. 2 | Comp. Ex. 3 | Comp. Ex. 4 |
|---|---|---|---|---|---|---|---|---|---|---|---|---|---|
| Blending composition | Polyisocyanate prepolymer A1 | 722 | 722 | 722 | 722 | 722 | 722 | | | 722 | 722 | 722 | 722 |
| | Polyisocyanate prepolymer A2 | | | | | | | 722 | | | | | |
| | Polyisocyanate prepolymer A3 | | | | | | | | 722 | | | | |
| | Polycaprolactone triol PLACCEL 308 | | 227 | | 227 | | | | 227 | 227 | 227 | | |
| | Polycaprolactone diol PLACCEL L205AL | 201 | | 126 | | | 201 | 201 | | | | 50 | |
| | Polycaprolactone diol PLACCEL L212AL | | | | 101 | | | | 101 | 250 | | | |
| | Polycaprolactone diol PLACCEL L220AL | | | | | | | | | | 401 | | |
| | Tripropylene glycol | 33 | 33 | 57 | | | 33 | 33 | | | | 81 | 98 |
| | Polycarbonate diol PLACCEL CD205PL | | | | | 251 | | | | | | | |
| | 1,6-Hexanediol | | | | | 12 | | | | | | | |
| | UV absorber TINUVIN 900 | 4 | 4 | 4 | 4 | 4 | 4 | 4 | 4 | 4 | 4 | 4 | 4 |
| | Photooxidation inhibitor TINUVIN 292 | 2 | 2 | 2 | 2 | 2 | 2 | 2 | 2 | 2 | 2 | 2 | 2 |
| | Leveling agent BYK 306 | 2 | 2 | 2 | 2 | 2 | 2 | 2 | 2 | 2 | 2 | 2 | 2 |
| | Mixed solvent $S_0$ | 305 | 338 | 259 | 402 | 337 | 0 | 305 | 305 | 531 | 706 | 212 | 182 |
| Paint | Total blending amount (g) | 1269 | 1328 | 1172 | 1460 | 1330 | 964 | 1269 | 1363 | 1738 | 2064 | 1073 | 1010 |
| | Solid content weight (g) | 637 | 667 | 591 | 730 | 665 | 640 | 637 | 671 | 869 | 1032 | 544 | 514 |
| | NV % | 50 | 50 | 50 | 50 | 50 | 66 | 50 | 49 | 50 | 50 | 50 | 50 |
| | NCO groups/OH groups molar ratio | 1 | 1 | 1 | 1 | 1 | 1 | 1 | 1 | 1 | 1 | 1 | 1 |
| | Viscosity (mPa·s) | 36 | 41 | 20 | 24 | 39 | 156 | 50 | 60 | 154 | 211 | 22 | 18 |
| | Average functional group equivalent weight (g/eq) | 219 | 228 | 187 | 355 | 230 | 219 | 220 | 178 | 414 | 551 | 152 | 127 |
| | Molecular weight between crosslinking points (g/eq) | 517 | 539 | 474 | 595 | 541 | 517 | 535 | 512 | 720 | 845 | 432 | 404 |

[Examples of Formation of Mutilayer Paint Films]

-Painting on metal materials- ⟨Examples 1 to 8 and Comparative Examples 1 to 4⟩

PriSurf (Primer Surfacer) Gray 062-1940 (manufactured by ROCK PAINT) as an intermediate paint was sprayed on a cationically electrodeposited iron plate (a zinc phosphate-coated PB-L3020 manufactured by Nippon Testpanel Co., Ltd.) such that the dry film thickness would be 30 μm. The wet film was allowed to stand at room temperature for 10 minutes and was dried and cured with use of a dryer at 140°C atmospheric temperature for 20 minutes. The painted plate was taken out and was allowed to stand at room temperature. Subsequently, HIROCK DX (highly light resistant urethane paint, main agent/curing agent/thinner = 4 parts/1 part/2 parts, manufactured by NIPPON PAINT Co., Ltd.) as a base paint was applied using a spray gun such that the dry film thickness would be 15 μm. The wet film was allowed to stand at room temperature for 10 minutes and was dried and cured with use of a dryer at 140°C atmospheric temperature for 20 minutes. The painted plate was taken out and was cooled to room temperature. The paint compositions obtained in Examples 1 to 8 and Comparative Examples 1 to 4 were each applied using a spray gun such that the dry film thickness would be 30 μm. The wet film was allowed to stand at room temperature for 10 minutes and was dried and cured in a dryer at 140°C atmospheric temperature for 20 minutes. Painted iron plates and test pieces were thus prepared.

The painted plates were evaluated by methods as described later, the results being set forth in Table 2.

[Table 2]

Table 2

| | Ex. 1 | Ex. 2 | Ex. 3 | Ex. 4 | Ex. 5 | Ex. 6 | Ex. 7 | Ex. 8 | Comp. Ex. 1 | Comp. Ex. 2 | Comp. Ex. 3 | Comp. Ex. 4 |
|---|---|---|---|---|---|---|---|---|---|---|---|---|
| Molecular weight between crosslinking points, g/eq | 517 | 539 | 474 | 595 | 541 | 517 | 535 | 512 | 720 | 845 | 432 | 404 |
| Scratch resistance | B | B | C | A | B | B | B | B | A | A | D | E |
| Impact resistance | A | B | B | B | B | A | A | A | B | C | D | E |
| Maximum pencil hardness at which a dent recovered | 5H | 5H | 5H | 4H | 5H | 5H | 4H | 5H | H | B | 4B | 2B |
| Adhesion | 100/100 | 100/100 | 100/100 | 100/100 | 100/100 | 100/100 | 100/100 | 100/100 | 100/100 | 100/100 | 100/100 | 100/100 |
| Transparency T, % | 92 | 92 | 92 | 92 | 92 | 92 | 92 | 92 | 92 | 92 | 92 | 92 |
| Glass transition temperature Tg, °C | 48 | 52 | 69 | 51 | 50 | 50 | 45 | 50 | 22 | 13 | 70 | 70 |

⟨Scratch resistance⟩

The surface gloss of the clear paint films of the multilayer paint-coated iron material test pieces was measured with a digital variable gloss meter (UGV-5D, manufactured by Suga Test Instruments Co., Ltd.) at a measurement angle of 60° to determine the gloss $L_0$ before testing. Each test piece was placed on a horizontal table of a surface property tester (HEIDON-14DR, manufactured by Shinto Scientific Co., Ltd.) with the clear paint film facing up. Steel wool No. 0000 as an indenter was caused to friction the clear paint film ten times back and forth at a load of 175 g/cm$^2$, a stroke of 25 mm and a speed of 30 mm/sec. The test pieces were allowed to stand for 2 hours, and the surface gloss $L_1$ of the clear paint films was measured with the same gloss meter as used for the $L_0$ measurement.

The gloss retention was obtained from the equation below and was evaluated according to the following criteria, the results being set forth in Table 2. A higher gloss retention indicates that the paint film is more excellent in scratch resistance.

[Math. 4]

$$\text{Gloss retention (\%)} = [\text{gloss after testing/gloss before testing}] \times 100\ (\%)$$

A: 95% - 100%

B: 90% - less than 95%

C: 70% - less than 90%

D: 50% - less than 70%

E: less than 50%

⟨Impact resistance⟩

The multilayer paint-coated iron material test pieces were each placed on a horizontal table of a DuPont impact tester with the clear paint film facing up. The test pieces were tested at a drop weight of 100 g and an impact shaft point diameter of 1/2 inch. The maximum height at which the weight falling therefrom did not damage the paint film was evaluated, the results being set forth in Table 2. A larger value of the maximum weight fall height indicates that the paint film is more excellent in impact resistance. The height of 100 cm was adopted as the upper limit in the testing. The damages to the paint films refer to removal of the paint films and cracks to the undercoat layer.

A: at least 100 cm
B: 90 cm - less than 100 cm
C: 70 cm - less than 90 cm
D: 50 cm - less than 70 cm
E: less than 50 cm

⟨Pencil hardness⟩

The surface of the clear paint films of the multilayer paint-coated iron material test pieces was dented by being scratched with pencil UNI (registered trademark) manufactured by MITSUBISHI PENCIL CO., LTD. at an angle formed by the pencil and the clear paint film of 45° in accordance with JIS-K5600. The test pieces were allowed to stand for 2 hours, and the surface condition was observed. The observation confirmed a recovery of the dent (the dent caused by the scratching recovered to the initial surface condition). The maximum pencil hardness at which the dent recovered is shown in Table 2. Scratching the paint film at above the maximum dent-recovery pencil hardness resulted in removal of the paint film. Accordingly, a higher value of the maximum pencil hardness indicates that the paint film is more excellent in this property.

⟨Adhesion evaluation method⟩

The clear paint films of the multilayer paint-coated iron material test pieces were cut with a cutter to create incisions at intervals of 2 mm in a lattice pattern having 100 squares. An adhesive tape was applied thereon and was removed. The separation of the paint films was inspected. Of the 100 squares, the squares that remained without separation were counted, the results being set forth in Table 2. A larger number of squares that remained without separation indicates that the paint film is more excellent in adhesion.

⟨Transmittance⟩

The clear paint composition was applied on a quartz glass substrate (50 mm x 50 mm) such that the dry film thickness would be 100 μm. The wet film was allowed to stand at room temperature for 10 minutes, and was dried and cured at 140°C atmospheric temperature for 20 minutes.

The resultant clear paint film was removed from the quartz glass substrate. The clear paint film was analyzed with a spectrophotometer (UV3100 manufactured by JASCO Corporation) in accordance with JIS-K7105 to determine the light transmittance (T, %) at 400 nm wavelength, the results being set forth in Table 2. A higher transmittance indicates that the paint film is more excellent in this property.

⟨Glass transition temperature Tg⟩

The clear paint composition was applied on a quartz glass substrate (50 mm x 50 mm) such that the dry film thickness would be 100 μm. The wet film was allowed to stand at room temperature for 10 minutes, and was dried and cured at 140°C atmospheric temperature for 20 minutes.

The resultant clear paint film was removed from the quartz glass substrate. The clear paint film was analyzed with DMS 6100 (manufactured by Seiko Instruments Inc.) in a tensile mode, a temperature range of -50°C to 150°C, a temperature increasing rate of 2°C/min and a frequency of 1 Hz. From the tanδ value obtained, the glass transition temperature was determined. The results are set forth in Table 2.

Industrial Applicability

The present invention is concerned with paint compositions which can form clear paint films having excellent scratch resistance and impact resistance, and with processes for forming multilayer paint films using the compositions, and multilayer paint films. In detail, the paint compositions can form paint films that have high scratch resistance enough to withstand frictional force exerted thereon by, for example, car washing, and have high impact resistance such that the paint films will not be removed or cracked even when strong external force is applied thereto by, for example, small stones that hit running vehicles. With these properties, the paint compositions of the invention are suitably used in articles which tend to be damaged on the surface, for example automobile exterior parts.

## Claims

1. A paint composition which comprises a polyisocyanate prepolymer (A) comprising a monomer unit of Formula (1) below and a polyol (B), wherein the polyisocyanate prepolymer (A) has a weight average molecular weight determined by gel permeation chromatography (GPC) relative to polystyrene standards of 1000 to 30000 and the paint composition has an average functional group equivalent weight of 160 to 400 g/eq;

[Chem. 1]

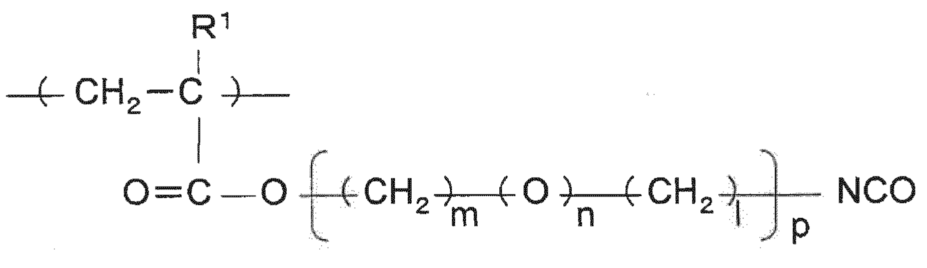

(1)

wherein $R^1$ is a hydrogen atom or a methyl group; n is an integer of 0 or 1; when n = 0, 1 = 0, p = 1 and m is an integer of 1 to 8; and when n = 1, m = 2, 1 = 2 and p is an integer of 1 to 4.

**2.** The paint composition according to claim 1, wherein the average functional group equivalent weight is 180 to 360 g/eq.

**3.** The paint composition according to claim 1 or 2, wherein the polyisocyanate prepolymer (A) comprises at least one raw material monomer selected from the group consisting of acryloyloxyethyl isocyanate, methacryloyloxyethyl isocyanate and methacryloyloxyethoxyethyl isocyanate.

**4.** The paint composition according to any one of claims 1 to 3, wherein the polyol (B) comprises at least one selected from the group consisting of polylactone polyols (b1), polyether polyols (b2), polycarbonate diols (b3) and aliphatic diols (b4).

**5.** A process for forming multilayer paint films, comprising forming a clear paint film on a base paint film, the clear paint film comprising the paint composition described in any one of claims 1 to 4.

**6.** A multilayer paint film produced by the process for forming multilayer paint films described in claim 5.

**7.** An automobile exterior part which comprises a multilayer paint film produced by the process for forming multilayer paint films described in claim 5.

**Patentansprüche**

**1.** Lackzusammensetzung, die ein Polyisocyanatprepolymer (A), welches eine Monomereinheit der nachstehenden Formel (1) enthält, und ein Polyol (B) umfasst, wobei das Polyisocyanatprepolymer (A) ein durch Gelpermeationschromatographie (GPC) bestimmtes Gewichtsmittel des Molekulargewichts relativ zu Polystyrolstandards von 1000 bis 30000 aufweist und die Lackzusammensetzung ein mittleres Funktionsgruppenäquivalentgewicht von 160 bis 400 g/Äq aufweist;

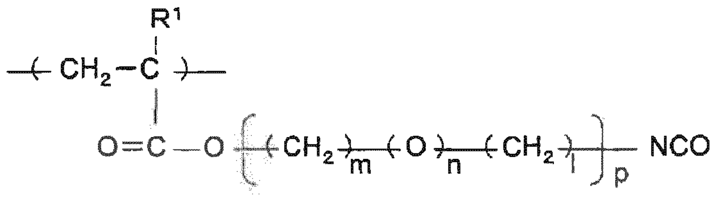
(1)

worin $R^1$ ein Wasserstoffatom oder eine Methylgruppe ist; n die ganze Zahl 0 oder 1 ist; wenn n = 0, l = 0, p = 1 und m ist eine ganze Zahl von 1 bis 8; und wenn n = 1, m = 2, l = 2 und p ist eine ganze Zahl von 1 bis 4.

**2.** Lackzusammensetzung nach Anspruch 1, wobei das mittlere Funktionsgruppenäquivalentgewicht 180 bis 360 g/Äq ist.

**3.** Lackzusammensetzung nach Anspruch 1 oder 2, wobei das Polyisocyanatprepolymer (A) mindestens ein Ausgangsmaterialmonomer enthält, das aus der Gruppe ausgewählt ist, die aus Acryloyloxyethylisocyanat, Methacryloyloxyehtylisocyanat und Methacryloyloxyethoxyethylisocyanat besteht.

**4.** Lackzusammensetzung nach einem der Ansprüche 1 bis 3, wobei das Polyol (B) mindestens eines enthält, das aus der Gruppe ausgewählt ist, die aus Polylactonpolyolen (b1) Polyetherpolyolen (b2), Polycarbonatdiolen (b3) und aliphatischen Diolen (b4) besteht.

**5.** Verfahren zum Herstellen von Mehrschichtlackfilmen, welches das Bilden eines klaren Lackfilms auf einem Basislackfilm umfasst, wobei der klare Lackfilm die Lackzusammensetzung nach einem der Ansprüche 1 bis 4 enthält.

**6.** Mehrschichtlackfilm, hergestellt durch das Verfahren zum Bilden von Mehrschichtlackfilmen nach Anspruch 5.

**7.** Automobilaußenteil, welches einen Mehrschichtlackfilm, hergestellt durch das Verfahren zum Bilden von Mehrschichtlackfilmen nach Anspruch 5, enthält.

**Revendications**

1. Composition de peinture qui comprend un prépolymère de polyisocyanate (A) comprenant une unité monomère de formule (1) ci-dessous et un polyol (B), dans laquelle le prépolymère de polyisocyanate (A) a un poids moléculaire moyen en poids déterminé par chromatographie par perméation sur gel (GPC) par rapport aux normes du polystyrène de 1000 à 30 000 et la composition de peinture a un poids équivalent de groupe fonctionnel moyen de 160 à 400 g/éq. ;

[FORMULE CHIMIQUE 1]

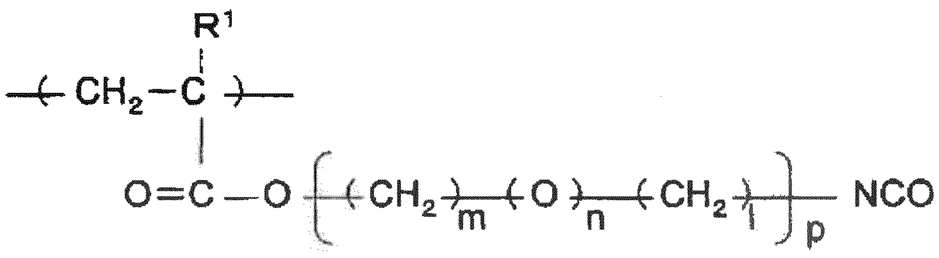

(1)

dans laquelle $R^1$ est un atome d'hydrogène ou un groupe méthyle ; n est un nombre entier de 0 ou 1 ; lorsque n = 0, l = 0, p = 1 et m est un nombre entier de 1 à 8; et lorsque n = 1, m = 2, l = 2 et p est un nombre entier de 1 à 4.

2. Composition de peinture selon la revendication 1, dans laquelle le poids équivalent de groupe fonctionnel moyen est de 180 à 360 g/éq.

3. Composition de peinture selon la revendication 1 ou 2, dans laquelle le prépolymère de polyisocyanate (A) comprend au moins un monomère matière première choisi dans le groupe constitué d'isocyanate d'acryloyloxyéthyle, d'isocyanate de méthacryloyloxyéthyle et d'isocyanate de méthacryloyloxyéthoxyéthyle.

4. Composition de peinture selon l'une quelconque des revendications 1 à 3, dans laquelle le polyol (B) comprend au moins l'un choisi dans le groupe constitué de polyols de polylactone (b1), de polyols de polyéther (b2), de diols de polycarbonate (b3) et de diols aliphatiques (b4).

5. Procédé de formation de films de peinture multicouches comprenant la formation d'un film de peinture transparent sur un film de peinture de base, le film de peinture transparent comprenant la composition de peinture décrite dans l'une quelconque des revendications 1 à 4.

6. Film de peinture multicouches produit par le procédé de formation de films de peinture multicouches décrit dans la revendication 5.

7. Partie extérieure d'automobile qui comprend un film de peinture multicouches produit par le procédé de formation de films de peinture multicouches décrit dans la revendication 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H0532935 A
- JP 2000297112 A
- JP H11228905 A
- JP 2001011376 A
- WO 03006520 A1